Europäisches Patentamt

European Patent Office

Office européen des brevets

(19)

(11) Numéro de publication: **0 183 094**
**B1**

(12) **FASCICULE DE BREVET EUROPÉEN**

(45) Date de publication du fascicule du brevet:
08.03.89

(51) Int. Cl.⁴: **F 16 D 25/14**

(21) Numéro de dépôt: **85114048.3**

(22) Date de dépôt: **05.11.85**

(54) Dispositif d'automatisation d'embrayage.

(30) Priorité: **07.11.84 FR 8416959**

(43) Date de publication de la demande:
**04.06.86 Bulletin 86/23**

(45) Mention de la délivrance du brevet:
**08.03.89 Bulletin 89/10**

(84) Etats contractants désignés:
**BE DE GB IT**

(56) Documents cité:
**EP-A-0 053 444**

**PATENT ABSTRACTS OF JAPAN, vol. 9, no. 18 (M-353) 1741 , 25 janvier 1985, page 26M353**
**PATENT ABSTRACTS OF JAPAN, vol. 8, no. 186 (M-320) 1623 , 25 août 1984, page 124M320**
**PATENT ABSTRACTS OF JAPAN, vol. 8, no. 80 (M-289) 1517 , 12 avril 1984, page 160M289**

(73) Titulaire: **RENAULT AGRICULTURE, 7, Rue Dewoitine, F-78141 Velizy- Villacoublay (FR)**

(72) Inventeur: **Arbeille, Yves, 4, Résidence du Clos, F-91370 Verrières- le- Buisson (FR)**
Inventeur: **Drutel, Yves, 30, Allée de la Fôret, F-92360 Meudon- la- Forêt (FR)**
Inventeur: **Viguier, Alain, 20, Avenue du Maréchal de lattre de Tassigny, F-92360 Meudon- la- Forêt (FR)**

(74) Mandataire: **Casalonga, Axel, BUREAU D.A. CASALONGA OFFICE JOSSE & PETIT Morassistrasse 8, D-8000 München 5 (DE)**

EP 0 183 094 B1

## Description

L'invention concerne l'automatisation d'un embrayage sur un véhicule, notamment sur un tracteur agricole.

On connaît d'innombrables dispositifs de transmission automatique pour véhicules, mais qui sont toujours difficilement adaptables sur un véhicule non prévu spécialement à cet effet, et qui en outre sont très onereux.

On connaît également des dispositifs d'embrayage automatique, commandés en général par un contact électrique actionné par le levier de vitesses, et qui permettent de conserver la boîte mécanique classique du véhicule. Cependant, ces embrayages automatiques, destinés à remplacer l'embrayage classique, sont eux-mêmes difficilement adaptables sur un véhicule.

On connaît enfin, d'après le document EP-A-53 444, un dispositif électro-hydraulique de commande d'un embrayage dans lequel une première électrovanne à trois voies commandée par tout ou rien raccorde par l'intermédiaire d'un étrangleur le vérin de commande soit à la source de pression, soit à la décharge sans intermédiaire possible, tandis qu'une seconde électrovanne à trois voies commandée par un courant haché raccorde en proportion variable, soit à la source de pression par l'intermédiaire d'un autre étrangleur, soit à la décharge, la chambre de pilotage d'une valve pilote qui, à son tour, régle l'échappement du fluide alimentant le vérin.

L'ensemble est assez complexe et tributaire des deux étrangleurs dont les réglages sont influencés par la présence d'impuretés susceptibles de les obturer, et également par la variation de viscosité du fluide.

Le but de l'invention est de réaliser un dispositif de commande qui soit plus simple, en évitant l'emploi de la valve pilote, et plus constant en n'étant plus tributaire d'étrangleurs.

L'invention part d'un tel dispositif d'automatisation d'un embrayage hydraulique sur un véhicule, comprenant deux électrovannes, deux capteurs à impulsion sensibles respectivement à la vitesse des roues et au régime du moteur du véhicule, un contact de commande et un circuit électronique réunis aux électrovannes, aux capteurs et au contact, et agencé pour assurer le débrayage, puis une manoeuvre progressive asservie de l'embrayage.

Elle se caractérise essentiellement par le fait que lesdites électrovannes sont à deux voies, et non pas à trois voies, comme dans le dispositif précédent, et sont raccordées hydrauliquement sur le vérin de manière à assurer l'une l'alimentation directe du vérin en fluide et sous pression, c'est-à-dire sans l'intermédiaire d'un étrangleur, et l'autre la décharge directe de la pression du vérin, c'est-à-dire également sans l'intermédiaire d'un étrangleur ni d'une valve pilotée. D'autre part le circuit électronique est agencé de manière à fournir aux électrovannes des impulsions de fréquence constante et de temps de conduction variant entre au moins deux limites, excluant l'alimentation constante et l'arrêt constant, et à pouvoir varier ces temps de conduction indépendamment l'un de l'autre afin de permettre le remplissage du vérin lorsque les impulsions fournies à la vanne d'alimentation ont un temps de conduction plus grand que celui des impulsions fournies à la vanne de décharge, et la décharge du vérin lorsque les impulsions fournies à la vanne d'alimentation ont un temps de conduction inférieur à celui des impulsions fournies à la vanne de décharge.

De préférence, les deux électrovannes sont commandées par des impulsions d'une fréquence déterminée en faisant varier seulement la durée des impulsions à l'intérieur de chaque cycle entre au moins deux valeurs représentant un temps long et un temps court, ces deux temps étant une fraction de la période correspondante, le dispositif électronique de commande agissant par cycles de traitement successifs et élaborant ladite fréquence par comptage à partir d'un signal d'horloge, et lesdits temps longs et courts étant également déterminé par comptage et en fonction du résultat desdits traitements, de telle manière que l'accélération linéaire du véhicule, déterminée par ledit calcul, ne dépasse pas une valeur préétablie, et que le régime du moteur, mesuré initialement au cours du débrayage, ne présente pas une chute supérieure à une valeur déterminée.

D'autres particularités de l'invention apparaîtront dans la description qui va suivre d'un mode de réalisation pris comme exemple et représenté sur le dessin annexé, sur lequel:

la figure 1 est un schéma d'ensemble du dispositif de commande;

les figures 2, 3 et 4 sont des courbes illustrant, en fonction du temps, respectivement l'accélération linéaire du véhicule, le régime du moteur et la course du vérin;

la figure 5 est le schéma électronique du dispositif de commande;

la figure 6 est l'organigramme présidant à l'exécution des calculs et tests de décision; et

les figures 7 et 8 représentent les organigrammes des programmes l'interruption correspondant respectivement aux deux types d'interruption.

L'installation du dispositif selon l'invention est particulièrement facilitée sur un véhicule comportant déjà sa propre source de pression hydraulique, par exemple un tracteur agricole, ce que l'on va supposer dans ce qui suit. Bien entendu, sur un autre véhicule, il serait toujours possible le rajouter un générateur de pression hydraulique entraîné par le moteur.

Le dispositif d'automatisation selon l'invention comprend, avant toute chose, un vérin hydraulique à simple effet 1 dont la mise en pression actionne, dans le sens du débrayage, la commande habituelle de débrayage 2. Le dispositif utilise d'autre part deux électrovannes dont l'une EV1 assure l'alimentation du vérin à partir de la source de pression 3, et dont l'autre, EV2, assure la décharge du vérin par mise en communication avec la bâche 4 du circuit hydraulique.

De la sorte, l'actionnement électrique de EV1 produit le débrayage, tandis que l'actionnement électrique de EV2 produit l'embrayage, mais naturellement avec une brutalité qui ne serait pas acceptable, ce qui justifie l'addition d'un dispositif d'asservissement permettant d'assurer la progressivité de l'embrayage.

Le but à atteindre dans cet asservissement est d'éviter tout à la fois:
- une chute de régime du moteur inacceptable (risque de calage),
- une accélération linéaire du véhicule trop importante (confort), et
- un temps d'embrayage trop long (usure des garnitures).

Pour réaliser cet asservissement, on utilise un dispositif électronique 5 qui reçoit en entrée un signal d'actionnement ou de non actionnement d'un contact électrique approprié 6, qui peut par exemple être le contact électrique habituel inséré sur le levier de commande non représenté de la boîte de vitesses, pour être actionné lorsqu'un effort s'exerce sur ce levier dans le sens du passage des vitesses, afin de commander le débrayage, puis n'être plus actionné lorsqu'on relâche le levier afin de commander l'embrayage progressif. D'autre part, le dispositif 5 reçoit également en entrées, les signaux provenant de deux capteurs 7 et 8 permettant de déterminer respectivement la vitesse des roues du véhicule et le régime du moteur. Ces capteurs sont le plus souvent constitués par des capteurs magnétiques sans contact détectant le passage de dents d'un organe dont la rotation est liée respectivement à celle des roues et à celle de l'arbre moteur. Chaque impulsion reçue correspond donc à une certaine distance parcourue par le véhicule ou à un certain angle de rotation de l'arbre moteur, respectivement. Enfin, le dispositif envoie en sortie les courants de commande des électrovannes EV1 et EV2.

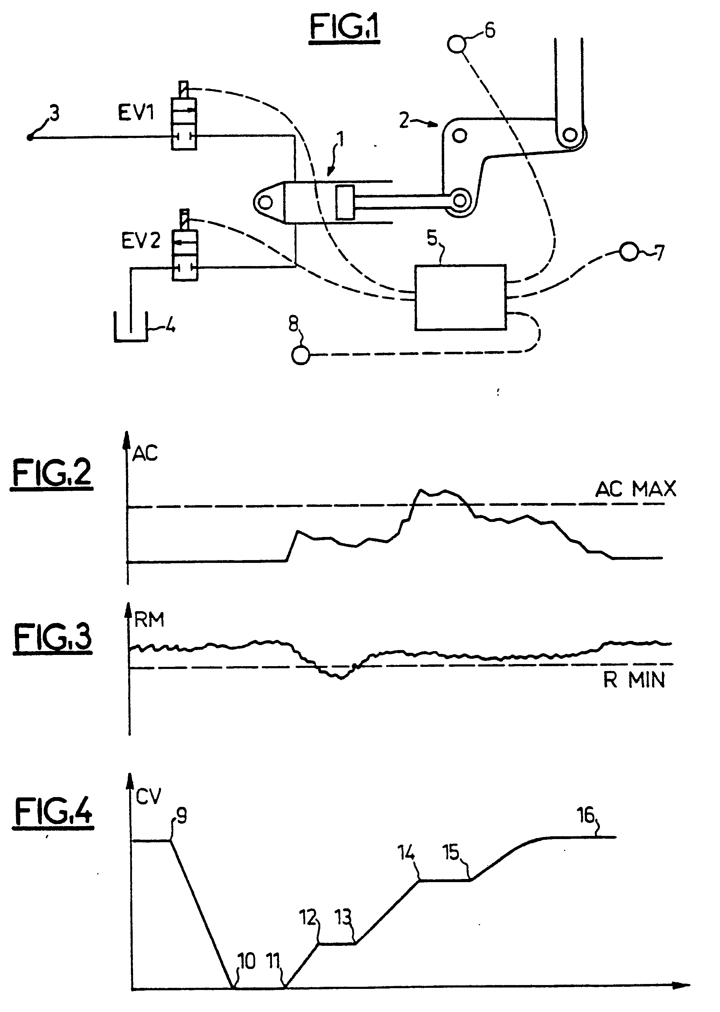

La règle d'action du dispositif d'asservissement 5 est relativement simple, et illustrée par les figures 2, 3 et 4 sur lesquelles on a porté respectivement l'accélération AC du véhicule, déterminée par la différence des vitesses mesurées par 7 au cours de deux cycles de mesure successifs, le régime moteur RM, déterminé par 8, et la course CV du vérin 1 résultant des ouvertures et fermetures respectives des électrovannes.

Si au temps représenté par le point 9 sur la courbe de la figure 4, on actionne le contact 6 pour le passage d'une vitesse, le circuit 5 commande l'ouverture de EV1, ce qui produit la rampe descendante 9, 10 et le palier horizontal 10, 11, c'est-à-dire le débrayage pendant le temps nécessaire au passage de la vitesse. Au temps représenté par le point 11, le contact 6 cesse alors d'être actionné, ce qui commande l'asservissement en vue de l'embrayage progressif.

Au cours de cet embrayage, EV2 se trouve ouvert à l'instant correspondant au point 11 et jusqu'au point 12. A cet instant on détecte, d'après la figure 3, que le régime moteur est descendu au-dessous d'une valeur déterminée à l'avance RMIN. Dans ce cas, le dispositif 5 ferme les deux électrovannes pour maintenir la pression sur l'embrayage mais ne pas l'accentuer, en attendant que le véhicule prenne de la vitesse et que le glissement de l'embrayage cesse, permettant ainsi au régime moteur de repasser au-dessus de la valeur minimum. A l'instant du point 13, on reprend alors l'ouverture de EV2 pour une nouvelle rampe ascendante 13, 14 correspondant à une augmentation progressive du couple d'embrayage. On a supposé qu'à l'instant correspondant au point 14, on détecte sur la figure 2 le passage de l'accélération au-dessus d'une valeur ACMAX déterminée à l'avance. Comme précédemment, on cesse alors d'alimenter les deux électrovannes pour laisser au véhicule le temps d'accroître sa vitesse tout en réduisant son accélération, jusqu'à repasser au-dessous de la valeur limite, ce qui se produit au point 15. Après cela, la rampe ascendante recommence par ouverture de EV2 et jusqu'à l'embrayage complet obtenu en 16.

On voit donc que le processus d'asservissement consiste à contrôler la fuite EV2 en l'interrompant chaque fois que nécessaire.

En outre, par sécurité, on peut prévoir la commande positive du débrayage pour ouverture de EV1 si pour une raison quelconque le régime moteur tombe au-dessous du régime de ralenti du moteur afin d'éviter le calage.

Les pentes des rampes descendantes, et surtout ascendantes, de la courbe 4, peuvent naturellement être réglées par des étrangleurs convenables dans les conduites hydrauliques. Cependant, dans la pratique, il est préférable de commander EV1 et EV2 par des courants pulsés à fréquence constante et à rapport cyclique variable sans aller jamais jusqu'à l'ouverture permanente ni à la fermeture permanente. A titre d'exemple, on peut utiliser une période de 77 ms, correspondant à une fréquence de 13 Hz et utiliser à l'intérieur de chaque période un temps de conduction variant entre un temps long de 16 ms et un temps court de 10 ms. Dans ce cas, si l'on actionne par exemple EV1 avec le temps court et EV2 avec le temps long, non seulement le temps de passage de l'huile dans chaque électrovanne n'est qu'une fraction du temps total, ce qui correspond donc à une réduction du débit à un certain pourcentage du débit d'ouverture maximale, mais en outre la vanne de remplissage et la vanne de décharge étant ouvertes en même temps, c'est la différence des débits qui est prise en compte, ce qui permet finalement d'éviter l'emploi d'étrangleurs à réglage précis.

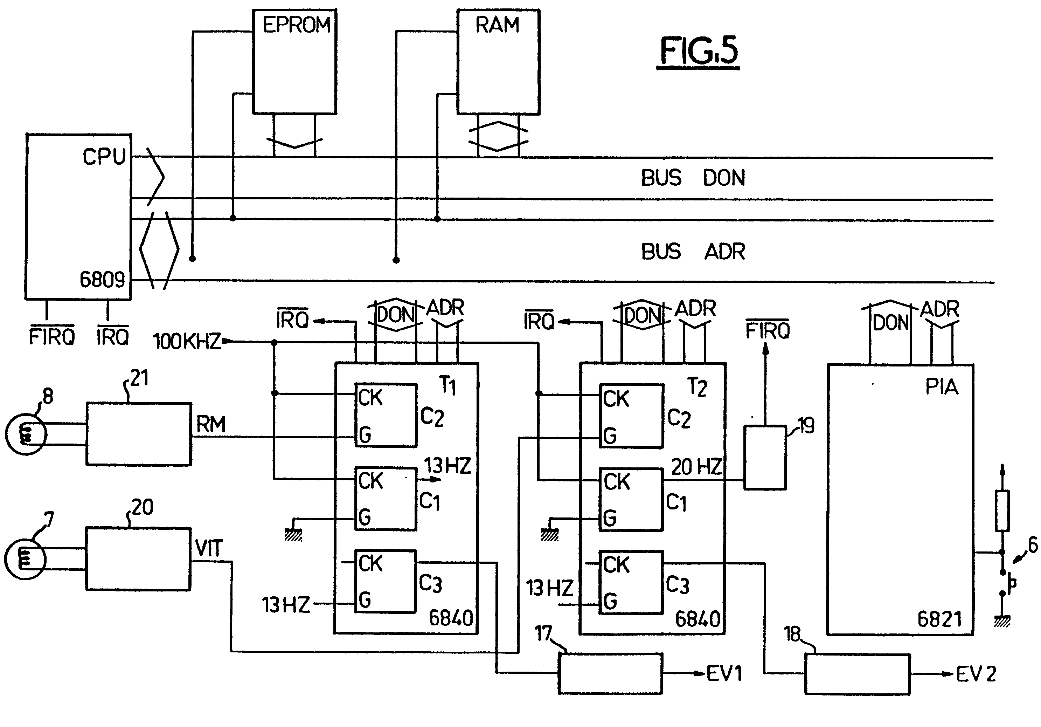

Compte tenu de cette remarque, le dispositif électronique 5 peut être réalisé selon le schéma illustré sur la figure 5.

Ce dispositif comprend une unité centrale de traitement CPU constituée par exemple par un microprocesseur 6809 avec une mémoire morte EPROM et une mémoire vive RAM, et également deux timers T1 et T2 constitués par exemple par des circuits intégrés 6840, et enfin un adaptateur d'interface parallèle PIA constitué par un circuit intégré 6821, ces divers circuits étant naturellement connectés par leurs branchements habituels incluant un bus de données DON et un bus d'adresse ADR représentés sur le schéma.

Chacun des timers T1 et T2 comporte trois compteurs, C1, C2 et C3, comportant chacun une entrée d'horloge CK, une entrée de commande C et une sortie. Les entrées d'horloge des compteurs C1 et C2 des deux timers sont alimentées par une horloge externe de 100 KHz, tandis que les entrées d'horloge du compteur C3 de chaque timer sont alimentées par une horloge interne du circuit correspondant et qui est à une fréquence plus élevée, par exemple 1 MHz pour améliorer la précision.

Le compteur C1 de T1, dont l'entrée de commande G est actionnée en permanence, fournit une horloge de 13 Hz dont le sigal attaque les entrées le commande G des deux compteurs C3 qui sont programmés en monostable, c'est-à-dire pour fournir un signal de sortie depuis le déclenchement par chaque impulsion de 13 Hz et jusqu'à ce que le compteur C3 correspondant ait compté un nombre déterminé parmi deux valeurs qui correspondent aux deux durées de conduction indiquées plus haut, ces nombres étant fournis par le microprocesseur par l'intermédiaire du bus de données. Ce signal de sortie est amplifié par une interface de puissance, respectivement 17 et 18, qui alimente directement les électrovannes EV1 et EV2 respectivement.

Le compteur C1 de T2 fournit une horloge de 20 Hz qui, après mise en forme dans un circuit 19 de mise en forme, attaque l'entrée FIRQ du microprocesseur CPU pour le calcul de l'accélération chaque 50 ms.

Les compteurs C2 de T1 et T2 fonctionnent en comparaison de fréquence et permettent la mesure du régime moteur et de la vitesse d'avance respectivement en utilisant la fréquence de 100 KHz indiquée. Les deux capteurs 7 et 8 de vitesse d'avance et de régime moteur indiqués précédemment actionnent, par l'intermédiaire d'une interface de mise en forme, respectivement 20 et 21, les entrées de commande G des compteurs C2 de T1 et de T2 respectivement. Chaque fois qu'un des compteurs C2 reçoit un front descendant émanant du capteur correspondant, il envoie un signal d'interruption IRQ par l'autre entrée d'interruption IRQ du microprocesseur CPU. Le microprocesseur est alors interrompu pour effectuer la mesure du contenu du compteur C2 correspondant par le bus de données. La mesure correspondante, vitesse ou régime moteur, est donc rafraîchie d'autant plus souvent que la vitesse ou le régime est important.

Par ailleurs, l'adaptateur d'interface parallèle PIA indiqué plus haut permet simplement de déterminer si le contact 6 indiqué précédemment est ouvert ou fermé.

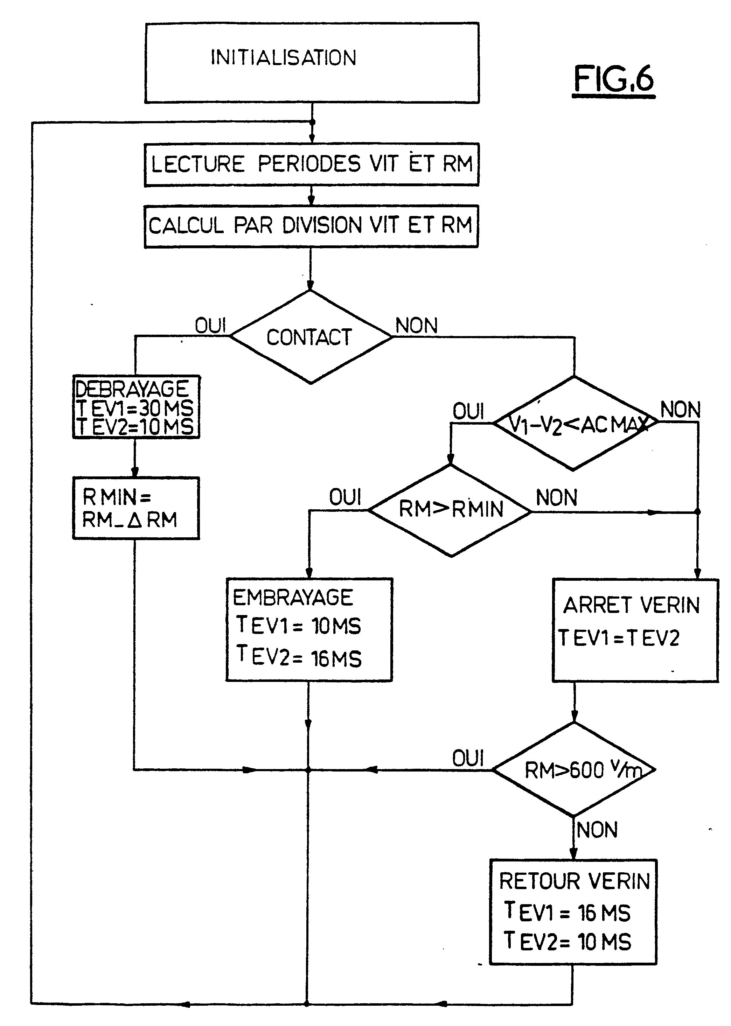

Le programme d'instructions du microprocesseur est contenu dans la mémoire morte EPROM et correspond à l'organigramme de la figure 6: après une phase d'initialisation, au cours de laquelle sont chargées les valeurs des diverses constantes, on commence une boucle au cours de laquelle on effectue successivement la lecture des périodes correspondant à la vitesse VIT et au régime moteur RM, puis on calcule par division les valeurs correspondantes VIT et RM. Ensuite, on détermine par lecture du PIA si le contact 6 est fermé ou non.

S'il est fermé, on ef fectue le débrayage en fixant le temps de conduction pour l'électrovanne 1 à une valeur supérieure au temps de conduction pour l'électrovanne 2, valeurs qui sont chargées dans les compteurs C3. Ensuite, on calcule la valeur du régime mininum acceptable en faisant la différence entre la valeur actuelle du régime et la chute permise, désignée par $\Delta RM$, après quoi on reboucle. Si au contraire, le contact n'est pas fermé, on effectue l'embrayage progressif. Pour cela: si la différence V1 - V2 est inférieure à l'accélération maximum tolérée ACMAX, et si le régime moteur est supérieur au régime minimum RMIN fixé précédemment, on effectue l'embrayage en fixant le temps de conduction de l'électrovanne 1 à la valeur courte de 10 ms et le temps de conduction de l'électrovanne 2 à la valeur longue de 16 ms. Dans le cas contraire, on effectue l'arrêt du vérin en fixant les deux temps de conduction à des valeurs égales, par exemple 10 ms. Après cet arrêt du vérin, on dérermine si RM est supérieur au régime de ralenti ou à un régime risquant d'entraîner un calage, par exemple 600 t/minute, et si c'est le cas on reboucle, alors que dans le cas contraire, on effectue un retour du vérin dans le sens contraire à celui de l'embrayage en fixant le temps de conduction de EV1 à la valeur longue et le temps de conduction de EV2 à la valeur courte, après quoi on reboucle.

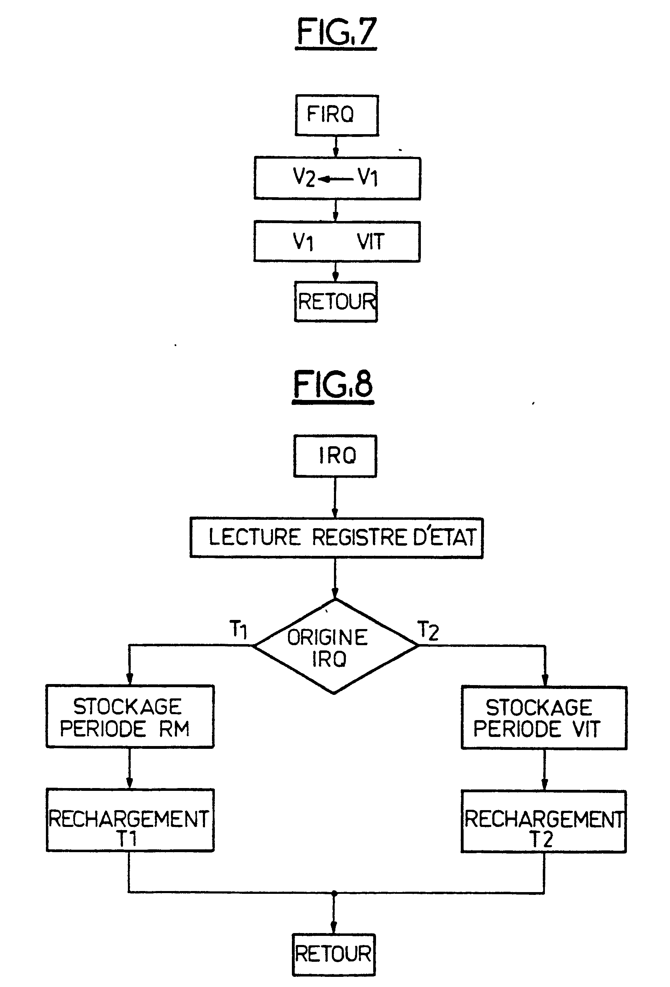

La figure 7 montre le premier programme d'interruption: chaque fois que le signal FIRQ est envoyé au microprocesseur, celui-ci transfère la valeur de la variable V1 à la variable V2 et la valeur de la variable VIT à la variable V1, effectuant ainsi une actualisation des deux dernières vitesses relevées, puis effectue un retour.

La figure 8 montre l'organigramme d'interruption de la deuxième entrée d'interruption IRQ qui produit en premier la lecture du registre d'état du microprocesseur, qui permet de déterminer si l'interruption provient de T1 ou de T2. Si cette interruption provient de T1, on effectue le stockage de la période RM, c'est-à-dire du contenu du compteur C2 de T1 comme indiqué plus haut, puis le rechargement de T1. Si l'interruption provient de T2, on opère de même le stockage de la période VIT prélevée sur le compteur C2 de T2, puis le rechargement de T2.

En définitive, on voit que l'invention permet, avec des moyens simples, peu encombrants et faciles à implanter, vérin hydraulique, électrovannes, capteurs et contact électrique, ainsi qu'avec un circuit électronique d'asservissement extrémement simple, d'assurer la fonction désirée, c'est-à-dire le fonct ionnement entièrement automatique de l'embrayage lors de chaque moeuvre du levier de vitesses.

**Revendications**

1. Dispositif d'automatisation d'un embrayage hydraulique sur un véhicule, comprenant deux électrovannes (EV1 et EV2), deux capteurs à impulsions (7 et 8) sensibles respectivement à la vitesse des roues (VIT) et au régime (RM) du moteur du véhicule, un contact de commande (6) et un circuit électronique (5) réuni aux électrovannes, aux capteurs et au contact et agencé pour assurer le débrayage, puis une manoeuvre progressive asservie de l'embrayage, <u>caractérisé par le fait</u> que lesdites électrovannes sont à deux voies et raccordées hydrauliquement sur le vérin (1) de manière à assurer l'une (EV1) l'alimentation directe du vérin en fluide sous pression et l'autre (EV2) la décharge directe de la pression du vérin, et que le circuit électronique (5) est agencé de manière à fournir auxdites électrovannes (EV1 et EV2) des impulsions de fréquence constante et de temps de conduction variant entre aux moins deux limites excluant l'alimentation constante et l'arrét constant, et à pouvoir varier ces temps de conduction indépendamment l'un de l'autre afin de permettre le remplissage du vérin lorsque les impulsions fournies à la vanne d'alimentation (EV1) ont un temps de conduction plus grand que celui des impulsions fournies à la vanne de décharge (EV2), et la décharge du vérin lorsque les impulsions fournies à la vanne d'alimentation (EV1) ont un temps de conduction inférieur à celui des impulsions fournies à la vanne de décharge (EV2).

2. Dispositif selon la revendication 1, caractérisé par le fait cue le dispositif électronique de commande (5) comporte un microprocesseur (CPU) avec mémoire morte et mémoire vive, et deux timers (T1, T2) à trois compteurs (C1, C2, C3) assurant le comptage d'impulsions l'horloge entra deux impulsions provenant des capteurs (7, 8) afin de déterminer les périodes correspondantes, et par division dans le microprocesseur les vitesses (VIT) et régimes (RM) correspodants, ainsi que les accélérations (AC) par la mise en mémoire des valeurs des vitesses, le comptage d'impulsions d'horloge pour déterminer ladite fréquence constante des impulsions de commande des électrovannes ainsi cu'une autre fréquence constante pour le calcul de l'accélération, et enfin le fonctionnement en monostable pour déterminer lesdits temps de conduction respectivement pour les deux électrovannes, les calculs respectivement desdites périodes et de ladite accélération étant assurés par le microprocesseur à la faveur d'interruptions séparées.

3. Dispositif selon la revendication 2, caractérisé par le fait qu'il est programmé de manière à effectuer les calculs par divisions de la vitesse (VIT) et du régime moteur (RM), et pour assurer, si le contact d'embrayage (6) est fermé, le débrayage par établissement d'un temps de conduction plus long pour l'électrovanne de remplissage (EVI) que pour l'électrovanne de décharge (EV2), puis le calcul du régime minimum (RMIN) par soustraction du régime mesuré et de la différence préfixée, et si le contact n'est pas fermé, la détermination de l'embrayage en fixant un temps de décharge (EV2) supérieur au temps de remplissage (EVI) si l'accélération calculée est inférieure à la valeur maximum préfixée (ACMAX) et si le régime moteur est supérieur au régime minimum (RMIN) calculé précédemment, avec arrêt du vérin dans le cas contraire par égalisation du temps de conduction des électrovannes, avec en outre une comparaison du régime moteur (RM) avec un régime limite bas pour assurer un retour du vérin, par fixation d'un temps d'alimentation (EV1) plus grand que le temps de décharge (EV2), si le régime descend au dessous de cette limite.

**Patentansprüche**

1. Vorrichtung zur Automatisierung einer hydraulischen Kupplung an einem Fahrzeug, enthaltend zwei Magnetventile (EV1 und EV2), zwei Impulsfühler (7 und 8), die die Geschwindigkeit der Räder (VIT) bzw. Motordrehzahlen (RM) daß Fahrzeugs erfassen, einen Steuerkontakt (6) und einen elektronischen Schaltkreis (5), der mit den Magnetventilen, den Fühlern und dem Kontakt in Verbindung steht und so eingerichtet ist, daß er das Auskuppeln sichert und dann ein fortschreitendes geregeltes Einkuppeln durchführt, dadurch gekennzeichnet, daß es sich bei den genannten Magnetventilen um Zweiwegventile handelt, die hydraulisch so mit dem Stellzylinder (1) in Verbindung stehen, daß eines (EV1) von ihnen die direkte Zufuhr der unter Druck stehenden Flüssigkeit zum Stellzylinder und das andere (EV2) die direkte Ableitung des Drucks aus dem Stellzylinder steuert, und daß der elektronische Schaltkreis (5) so ausgelegt ist, daß er den beiden Magnetventilen (EV1 und EV2) Impulse konstanter Frequenz während einer Stromführungsdauer zuführt, die wenigstens zwischen zwei Grenzen variieren unter Ausschluß der konstanten Zufuhr und der konstanten Unterbrechung, wobei diese Stromführungszeiten unabhängig voneinander so variiert werden können, daß das Füllen des Stellzylinders ermöglicht wird, wenn die dem Magnetventil für die Füllung (EV1) zugeführten Impulse eine längere Stromführungsdauer als die dem zweiten Magnetventil für das Leeren (EV2) zugeführten Impulse haben, und das Leeren des Stellzylinders ermöglicht wird, wenn die dem Füllventil (EV1) zugeführten Impulse eine kürzere Stromführungsdauer als die dem Entleerungsventil (EV2) zugeführten Impulse haben.

2. Vorrichtung gemäß Anspruch 1, dadurch gekennzeichnet, daß die elektronische Steuervorrichtung (5) einen Mikroprozessor (CPU - ZE) mit Fest- und Arbeitsspeicher sowie zwei Zeitgeber (T1, T2) mit je drei Zählern (C1, C2, C3) enthält, die die Impulse des Taktgebers zwischen zwei von den Fühlern (7, 8) ankommenden Impulsen zählen, um die entsprechenden Perioden zu bestimmen, und durch Division im Mikroprozessor die entsprechenden Geschwindigkeiten (VIT) und Drehzahlen (RM) zu bestimmen, sowie die Beschleunigungen (AC) durch Abspeichern der Geschwindigkeitswerte, das Zählen der Impulse des Taktgebers zwecks Bestimmung der genannten konstanten Frequenz der Steuerimpulse für die Magnetventile, sowie eine andere konstante Frequenz zur Berechung der Geschwindigkeit, und schließlich das monostabile Ansprechen zwecks Bestimmung der genannten entsprechenden Stromführungszeiten für die zwei Magnetventile festlegen, wobei die entsprechenden Berechungen der genannten Perioden und der genannten Beschleunigung durch den Mikroprozessor zugunsten der gesonderten Unterbrechungen sichergestellt werden.

3. Vorrichtung gemäß Anspruch 2, dadurch gekennzeichnet, daß sie darauf programmiert ist, die Berechnungen durch Division der Geschwindigkeit (VIT) und der Motordrehzahl (RM) durchzuführen und, wenn der Kontakt der Kupplung (6) geschlossen ist, das Auskuppeln mittels Festlegung einer längeren Stromführungsdauer für das Magnetventil (EV1) für die Füllung als für das Magnetventil (EV2) für die Leerung sicherzustellen, dann die Berechnung der Mindestdrehzahl (RMIN) durch Subtraktion der gemessenen Drehzahl und der vorbestimmten Differenz durchzufuhren, und wenn der Kontakt nicht geschlossen ist, das Einkuppeln mittels Festlegung einer längeren Entleerungszeit (EV2) als die Füllzeit (EV1), wenn die berechnete Beschleunigung unter dem vorgegebenen Maximalwert liegt (ACMAX) und die Motordrehzahl über der vorher berechneten Mindestdrehzahl (RMIN) liegt, durchzuführen, und den Stellzylinders im gegenteiligen Fall durch Gleichheit der Stromführungszeiten der Magnetventile anzuhalten, mit einem zusätzlichen Vergleich zwischen der Motordrehzahl (RM) mit einem unteren Grenzwert, um das Wiedertätigwerden des Stellzylinders durch Festlegen einer größeren Füllzeit (EV1) als die Entleerungszeit (EV2) zu gewährleisten, wenn die Drehzahl unter diesen Grenzwert absinkt.

## Claims

1. A device for automating a hydraulic vehicle clutch, the device comprising two solenoid valves (EV1 and EV2), two impulse detectors (7, 8) responding to the wheel speed (VIT) and engine speed (RM) respectively of the vehicle, a control contact (6) and an electronic circuit (5) connected to the solenoid valves, detectors and contact and adapted to produce declutching followed by a controlled gradual clutching, characterised in that the solenoid valves are of the two-way kind and are so hydraulically connected to the actuator (1) that the solenoid valve (EV1) supplies the actuator directly with pressure fluid and the other solenoid valve (EV2) discharges the actuator pressure directly; and the electronic circuit (5) is adapted to supply the solenoid valves (EV1, EV2) with constant-frequency signals whose gating time varies between at least two limits excluding constant energization and constant stoppage and to be able to vary the gating times independently of one another so that the actuator can fill up when the signals supplied to the feed valve (EV1) have a longer gating time than the signals supplied to the discharge valve (EV2) and so that the actuator can discharge when the signals supplied to the feed valve (EV1) have a shorter gating time than the signals supplied to the discharge valve (EV2).

2. A device according to claim 1, characterised in that the electronic control facility (5) comprises a microprocessor (CPU) having a read-only store and an active store, and two timers (T1, T2) having three counters (C1, C2, C3) for: counting timing pulses between two signals from the detectors (7, 8) in order to determine the corresponding periods and by divis ion in the microprocessor, the corresponding wheel speeds (VIT), engine speeds (RM) and accelerations (AC) by storing the speed values; counting timing pulses for determining the constant frequency of the solenoid valve control signals and another constant frequency for calculating acceleration, and monostable operation to determine the respective gating times for the two solenoid valves, the calculations of such periods and of such acceleration being performed by the microprocessor in favour of separate interruptions.

3. A device according to claim 2, characterised in that it is so programmed as to make calculations by divisions of the wheel speed (VIT) and engine speed (RM) and to release the clutch, with the clutching contact closed, by defining a longer gating time for the feed solenoid valve (EV1) than for the discharge solenoid valve (EV2), then calculating the minimum engine speed (RMIN) by subtraction of the measured engine speed and the preset difference and, if the contact is not closed, determining engagement of the clutch by setting a discharge time (EV2) longer than the filling time (EV1) if the calculated acceleration is less than the preset maximum value (ACMAX) and if the engine speed is greater than the preset minimum (RMIN), with stoppage of the actuator in the opposite case by equalization of the gating time of the solenoid valves, furthermore with a comparison of the engine speed (RM) with a critical low speed to return the actuator by setting a feed time (EV1) longer than the discharge time (EV2) if engine speed drops below its critical low speed.

EP 0 183 094 B1

## FIG.1

## FIG.2

AC

AC MAX

## FIG.3

RM

R MIN

## FIG.4

CV

1

## FIG.5

EP 0 183 094 B1

FIG.6

INITIALISATION

LECTURE PERIODES VIT ET RM

CALCUL PAR DIVISION VIT ET RM

CONTACT — OUI / NON

DEBRAYAGE
T EV1=30 MS
T EV2=10 MS

R MIN =
RM_ Δ RM

V1–V2<AC MAX — OUI / NON

RM>R MIN — OUI / NON

EMBRAYAGE
T EV1= 10 MS
T EV2= 16 MS

ARRET VERIN
T EV1=T EV2

RM>600 V/m — OUI / NON

RETOUR VERIN
T EV1 = 16 MS
T EV2= 10 MS

# FIG.7

```
┌──────────┐
│   FIRQ   │
└──────────┘
      │
      ▼
┌──────────────┐
│  V2 ◄── V1   │
└──────────────┘
      │
      ▼
┌──────────────┐
│  V1     VIT  │
└──────────────┘
      │
      ▼
┌──────────┐
│  RETOUR  │
└──────────┘
```

# FIG.8